# EUROPÄISCHE PATENTSCHRIFT

(11) **EP 3 399 379 B1**
(45) Veröffentlichungstag und Bekanntmachung des Hinweises auf die Patenterteilung: **26.04.2023**
(21) Anmeldenummer: 17169617.2
(22) Anmeldetag: 05.05.2017
(51) Int. Cl.: G05D 1/02, B65G 1/04, B66F 9/07, B66F 9/075

(54) **SENSORANORDNUNG**
SENSOR ASSEMBLY
SYSTÈME DE DÉTECTION

(43) Veröffentlichungstag der Anmeldung: 07.11.2018
(73) Patentinhaber: Leuze electronic GmbH + Co. KG, 73277 Owen/Teck (DE)
(72) Erfinder: Müller, Thomas, 73119 Zell u.A. (DE); Abraham, Sven-Philipp, 72622 Nürtingen (DE)
(74) Vertreter: Ruckh, Rainer Gerhard

(56) Entgegenhaltungen:
- WO-A1-2012/024730
- US-A- 4 541 049
- US-A- 4 684 247
- US-A- 4 777 601
- US-B2- 9 340 399

## Beschreibung

Die Erfindung betrifft eine Sensoranordnung zur Positionierung eines Gegenstands.

Die Sensoranordnung umfasst einerseits einen optischen Sensor der an dem Gegenstand, insbesondere einem Fahrzeug angeordnet ist. Weiterhin umfasst die Sensoranordnung eine Anordnung von stationär angeordneten Markierungen. Prinzipiell sind auch eine stationäre Anordnung des optischen Sensors und eine bewegliche Anordnung von Markierungen möglich.

Der optische Sensor der Sensoranordnung weist vorzugsweise eine Kamera auf, mit der eine Markierung gelesen werden kann, wenn sich das Fahrzeug im Bereich dieser Markierung befindet. Durch die ortsaufgelöste Erfassung der Markierung werden im optischen Sensor Positionssignale generiert, die zur Positionierung des Fahrzeugs verwendet werden können.

Ein Beispiel für derartige Systeme sind Vorrichtungen zur Positionierung von Fahrzeugen wie in der DE 199 10 933 B4 beschrieben.

Ein weiteres Anwendungsbeispiel sind Hochregallager.

In Hochregallagern werden Hochregale mittels Regalbediengeräten be- und entladen. Ein derartiges Hochregal besteht aus einer Mehrfachanordnung von in horizontaler Richtung verlaufenden Riegeln und in vertikaler Richtung verlaufenden Stehern, wobei diese die einzelnen Regalfächer, im Folgenden Fächer genannt, des Hochregals begrenzen. In diese werden Gegenstände, insbesondere Paletten oder Behältereingeladen.

Um mit dem Regalbediengerät an den jeweiligen Fächern Be- oder Entladevorgänge durchführen zu können, muss das Regalbediengerät exakt am jeweiligen Fach positioniert werden.

Typischerweise erfolgt hierzu zunächst eine Grobpositionierung des Regalbediengeräts mittels eines am Regalbediengerät angebrachten Distanzsensors. Anschließend erfolgt eine Feinpositionierung mittels eines eine Kamera aufweisenden optischen Sensors. Zur Durchführung der Feinpositionierung wird mittels der Kamera eine Markierung an dem jeweiligen Fach erfasst und anhand dessen das Regalbediengerät in dessen Prozessbetrieb selbsttätig auf das Fach positioniert.

Eine derartige Sensoranordnung ist aus der DE 16 2013 111 187 A1 bekannt.

Die US 4,541,049 A betrifft eine Sensoranordnung an einem Fahrzeug. Zur Positionierung des Fahrzeugs werden Positionen von ortsfest angeordneten Marken bestimmt. Die Sensoranordnung weist hierzu eine Kamera auf. Als Maß für die Qualität der Messungen wird ein Qualitätsfaktor bestimmt.

Die WO 2012/024730 A1 offenbart eine Sensoranordnung gemäß dem Oberbegriff des Anspruchs 1. Dieses Dokument betrifft eine Vorrichtung zur Navigation eines Fahrzeugs. Die Vorrichtung umfasst eine Farb-Kamera und Infrarot-Kamera. Mit diesen Kameras werden zeitaufgelöst Bildsequenzen von der Umgebung des Fahrzeugs ermittelt, insbesondere auch von vorhandenen Hindernissen. Diese Bilder werden zur Navigation verwendet. Die Güte der Bilder wird anhand verschiedener Bildaufnahmegrößen beurteilt.

Die US 4,684,247 A betrifft ein Regalbediengerät mit einem Kamerasensor, der Reflektoren erfasst, die an Regalen angeordnet sind.

Die US 4,777,601 A betrifft ein Spurführungssystem, bei welchem ein Fahrzeug entlang einer auf dem Boden einer Halle angebrachten Spur geführt wird, die sensorisch erfasst wird.

Die US 9 340 399 B2 betrifft ein Navigationssystem für ein Fahrzeug. Auf dem Fahrzeug ist eine Kamera installiert, die Kanten von Beleuchtungsmitteln an der Decke eines Raumes erfasst. Die Bildsignale der Kamera werden für die Navigation verwendet.

Der Erfindung liegt die Aufgabe zugrunde, eine Sensoranordnung der eingangsgenannten Art mit einer erweiterten Funktionalität auszubilden.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Positionierung eines Gegenstands und umfasst einen am Gegenstand anordenbaren optischen Sensor, welcher eine Kamera aufweist. Mit einer Anordnung von Markierungen wird der Gegenstand relativ zu den Markierungen beweglich angeordnet. Durch eine ortsaufgelöste Erfassung einer Markierung generiert der optische Sensor ein Positionssignal als Ausgabegröße. Im optischen Sensor ist eine Qualitätskennzahl als Maß für die Qualität der Erfassung der Markierungen bestimmt. Der optische Sensor ist ausgebildet, die Qualitätskennzahl oder eine davon abgeleitete Größe als Ausgabegröße auszugeben. Anhand der Qualitätskennzahlen wird eine Diagnose zur Früherkennung von Störungen der Sensoranordnung ermöglicht. Die Diagnose und Früherkennung wird im optischen Sensor selbst durchgeführt.

Der Grundgedanke der Erfindung besteht somit darin, dass die Erfassung einer Markierung mit dem optischen Sensor nicht nur zur Positionierung genutzt wird, indem der optische Sensor abhängig von der erfassten Markierung ein Positionssignal generiert. Vielmehr wird bei der Erfassung der Markierung eine Qualitätskennzahl ermittelt, die ein Maß für die Qualität und Zuverlässigkeit der Erfassung dieser Markierung darstellt.

Anhand der Qualitätskennzahlen, die vorzugsweise für alle Markierungen einzeln ermittelt werden, wird eine Diagnose und Früherkennung von Störungen der Sensoranordnung ermöglicht. Insbesondere geben die Qualitätskennzahlen Aufschluss darüber, ob die Markierungen durch äußere Störeinflüsse beeinträchtigt sind oder ob der optische Sensor selbst eine Fehlfunktion aufweist. Weiterhin kann mit den Qualitätskennzahlen überprüft werden, ob der optische Sensor am Gegenstand korrekt angeordnet ist und ob der optische Sensor mit dem Gegenstand korrekt relativ zu den Markierungen positioniert ist.

Die Diagnose und Früherkennung wird im optischen Sensor selbst durchgeführt.

Für eine Diagnose oder Früherkennung von Störungen werden im optischen Sensor geeignete Ausgabegrößen generiert, die an die externe Einheit ausgegeben werden.

Im einfachsten Fall bilden die Qualitätskennzahlen selbst die Ausgabegrößen. Alternativ können die Ausgabegrößen von der Qualitätskennzahl abgeleitete Größen sein.

Beispielsweise kann als Ausgabegröße ein Warnsignal generiert werden, wenn die Qualitätskennzahl für eine Markierung einen vorgegebenen Schwellwert unterschreitet.

Mit den Warnsignalen kann das Personal vor Ort direkt auf vorhandene Beeinträchtigungen hingewiesen werden. Das Warnsignal ist vorzugsweise als optische Warnmeldung ausgebildet. Da die Warnsignale für alle Markierungen generiert werden, kann das Personal sofort erkennen, wo die jeweilige Beeinträchtigung vorliegt.

Weiterhin können als Ausgabegrößen Bilder von Markierungen ausgegeben werden, wenn die Qualitätskennzahl für die jeweilige Markierung einen vorgegebenen Schwellwert unterschreitet.

Anhand der ausgegebenen Bilder können in der externen Einheit Beeinträchtigungen der Sensoranordnung genau analysiert werden um dann geeignete Gegenmaßnahmen veranlassen zu können.

Generell wird durch die erfindungsgemäße Ermittlung der Qualitätskennzahl eine Diagnosemöglichkeit geschaffen, mit der Beeinträchtigungen der Sensoranordnung beseitigt werden können, bevor es zu einem Ausfall oder Stillstand der mit der Sensoranordnung überwachten Anlage kommt. Damit wird die Verfügbarkeit der jeweiligen Anlage erhöht. Dies ist von besonders hoher Bedeutung in Hochregallagern, wo mit der Sensoranordnung eine exakte Positionierung eines Regalbediengeräts an Fächern von Hochregalen durchgeführt werden muss.

Generell können auch auffällige oder fehlerbehaftete Fächer identifiziert werden, damit diese in einem Wartungssystem später instandgesetzt werden.

Bei der erfindungsgemäßen Sensoranordnung ist vorteilhaft eine Markierung von einer Marke oder einer Objektgeometriestruktur gebildet.

Beispielsweise ist die Objektgeometriestruktur eine Objektkante oder ein von einem Objektstand begrenztes Loch.

Die eine Markierung bildende Marke kann beispielsweise eine Kodierung aufweisen, die die jeweilige Position der Markierung enthält. Eine solche Markierung kann prinzipiell auch von einem Reflektor gebildet sein.

Besonders vorteilhaft ist die Qualitätskennzahl aus mehreren Grundgrößen gebildet. Die Grundgrößen bilden Beurteilungskriterien für die erfasste Markierung und/oder für die Aufnahmebedingungen der Bilderfassung mit dem optischen Sensor. Insbesondere können als Grundgrößen Parameter vorgesehen sein, die auf eine Degradierung des optischen Sensors hinweisen. Die Grundgrößen können auch von Parametern gebildet sein, die charakteristisch für die Markierungen oder Fächer, an welchen die Markierungen angeordnet sind, sind.

Zweckmäßig ist die Grundgröße als Abweichung bezüglich einer Normierungsfunktion, welche der idealen Erkennung einer Markierung entspricht, definiert.

Die Grundgröße stellt dann generell eine Zahl kleiner als Eins dar, wobei die Grundgröße umso größer ist, je geringer die jeweilige Qualitätsbeeinträchtigung ist. Prinzipiell kann die Grundgröße auch ein Buchstabe sein.

Die Grundgrößen können je nach Ausbildung der Markierung unterschiedlich ausgebildet sein.

Beispielsweise kann die Grundgröße durch die Form einer Objektgeometriestruktur definiert sein. Im idealen Fall wird die Objektgeometriestruktur, beispielsweise in Form eines Lochs, in ihrer Form vollständig erkannt. Hängt jedoch ein störender Gegenstand wie eine Verpackungsfolie von der Objektgeometriestruktur, so wird deren Geometrie nur unvollständig erkannt, was sich in einer reduzierten Qualitätskennzahl niederschlägt.

Weiterhin kann die Grundgröße ein Vergrößerungsfaktor einer Objektgeometriestruktur sein. Im idealen Fall wird die Objektgeometriestruktur mit einer bestimmten Größe erfasst, wenn sich der optische Sensor in einem Sollabstand zur Markierung befindet. Wird beispielsweise das Fahrzeug mit dem optischen Sensor an der Markierung fehlpositioniert, wird je nachdem ob die Distanz des optischen Sensors zur Markierung größer oder kleiner als der Sollabstand ist, die Markierung auf der Kamera kleiner oder größer abgebildet, sodass die Qualitätskennzahl reduziert ist.

Entsprechendes gilt für den Fall, dass die Grundgröße von der Lage der erfassten Markierungen innerhalb eines Erfassungsbereichs der Kamera gebildet ist.

Schließlich können als Grundgrößen der Kontrast einer Marke, das Bildrauschen oder die Bildhelligkeit der Kamera dienen. Diese Grundgrößen geben Aufschluss über den Zustand des optischen Sensors.

Besonders vorteilhaft ist die Qualitätskennzahl aus dem Mittelwert oder einem gewichteten Mittelwert der Grundgröße gebildet.

Dabei bilden die Normierungsfunktion und Gewichtungsfaktoren zur Bildung gewichteter Mittelwerte einstellbare Parameter.

Diese Parameter können somit applikationsspezifisch vorgegeben werden.

Hierzu sind die einstellbaren Parameter als Vorabwerte in dem optischen Sensor abgespeichert oder als Eingabegrößen in den optischen Sensor eingebbar oder werden in einem Einlernvorgang ermittelt. Alternativ zum Einlernvorgang kann auch eine Referenzierung der Parameter erfolgen.

Bei einem Einlernvorgang wird eine entsprechende Markierung vorab mit dem optischen Sensor detektiert um dann aus dem erfassten Bild die gewünschten Größen abzuleiten.

Die Erfindung wird im Folgenden anhand der Zeichnungen erläutert. Es zeigen:
- Figur 1:: Schematische Darstellung eines Regalbediengeräts mit einem optischen Sensor an einem Hochregallager.
- Figur 2:: Schematische Einzeldarstellung des optischen Sensors.
- Figur 3:: Abbildung eines Lochs als Markierung auf der Kamera des optischen Sensors gemäß Figur 2 a) im fehlerfreien Fall b) bei Vorliegen einer Beeinträchtigung
- Figur 4:: Abbildung einer Marke als Markierung auf der Kamera des optischen Sensors gemäß Figur 2 a) im fehlerfreien Fall b) bei Vorliegen einer Beeinträchtigung

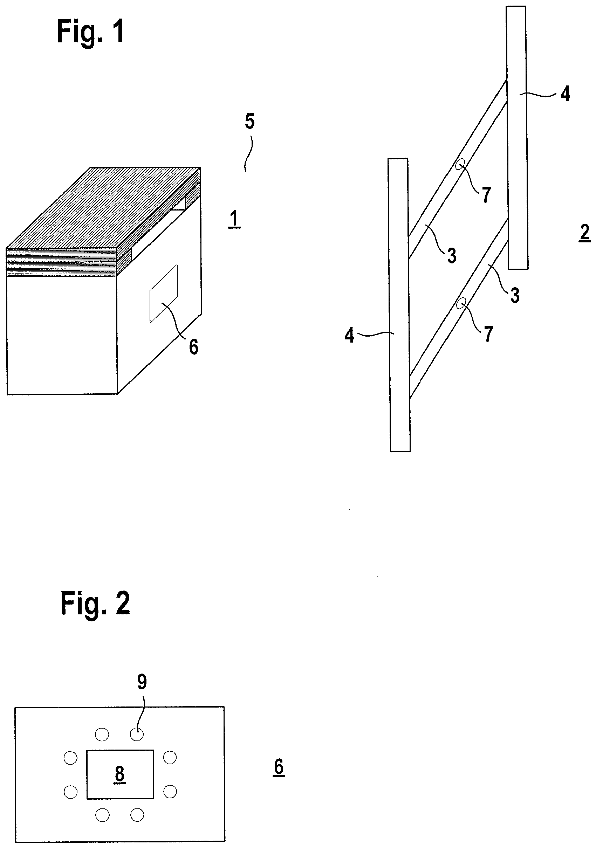

Figur 1 zeigt schematisch ein Regalbediengerät 1 an einem Hochregallager 2. Das in Figur 1 nur angedeutet dargestellte Hochregallager 2 besteht aus einer Anordnung von in horizontaler Richtung verlaufenden Profilen, sogenannten Querriegeln 3, sowie aus einer Anordnung von in vertikaler Richtung verlaufenden Profilen, sogenannten Stehern 4. Die Steher 4 und Querriegel 3 begrenzen Fächer, spezifisch Regalfächer. Mittels des Regalbediengeräts 1 werden Gegenstände wie Paletten 5 oder Behälter in diesen Fächern eingelagert, beziehungsweise aus diesen entnommen.

Hierzu muss das fahrbare Regalbediengerät 1 exakt an dem jeweiligen Fach des Hochregallagers 2 positioniert werden. Zunächst erfolgt dabei eine Grobpositionierung des Regalbediengeräts 1, beispielsweise mittels eines am Regalbediengerät 1 angeordneten, nicht dargestellten Distanzsensors. Anschließend erfolgt eine Feinpositionierung des Regalbediengeräts 1. Hierzu ist am Regalbediengerät 1 ein optischer Sensor 6 als Bestandteil der erfindungsgemäßen Sensoranordnung angebracht. An den einzelnen Fächern sind Markierungen als weitere Bestandteile der Sensoranordnung angebracht. Zur Feinpositionierung des Regalbediengeräts 1 werden von dem optischen Sensor die Markierungen erfasst, wenn das Regalbediengerät 1 vor dem jeweiligen Fach angeordnet ist. Im vorliegenden Fall ist die Markierung von einer Objektgeometriestruktur in Form eines Lochs 7 im jeweiligen Querriegel 3 gebildet. Alternativ kann auch eine Kante eines Stehers 4 und/oder eine Kante eines Querriegels 3 als Markierung verwendet werden.

Der in Figur 2 separat dargestellte optische Sensor 6 weist eine Kamera 8 mit einer matrixförmigen, das heißt zweidimensionalen Anordnung von Pixeln, das heißt lichtempfindlichen Elementen auf. Vorteilhaft ist die Kamera 8 von einem CCD- oder CMOS-Array gebildet, welchen zur Störlichtunterdrückung ein Tageslichtfilter zugeordnet ist. Weiterhin weist der optische Sensor 6 eine Beleuchtungseinheit auf, welche von konzentrisch zur Kamera 8 und um diese herum angeordneten Leuchtdioden 9 gebildet ist. Die Leuchtdioden 9 emittieren Lichtstrahlen, die konzentrisch zur Symmetrieachse der Kamera 8 verlaufen, welche die optische Achse des optischen Sensors 6 bildet. Die an der Kamera 8 anstehenden Signale werden in einer nicht dargestellten Auswerteeinheit ausgewertet.

Mit dem optischen Sensor 6 wird die Lage der Markierung auf der Kamera 8 erfasst.

Dadurch werden im optischen Sensor 6 Positionssignale generiert und als Ausgabegröße an eine externe Einheit wie zum Beispiel die Fahrzeugsteuerung des Regalbediengeräts 1 ausgegeben.

Erfindungsgemäß wird im optischen Sensor 6 für jede erfasste Markierung nicht nur ein Positionssignal, sondern auch eine Qualitätskennzahl ermittelt, die angibt, ob die Erfassung der Markierungen fehlerfrei ist oder nicht. Der Betrag der Qualitätskennzahl liefert zudem ein Maß für die Beeinträchtigung. Je größer die Qualitätskennzahl, desto geringer ist die Beeinträchtigung. Vorzugsweise ist die Qualitätskennzahl eine normierte Größe, die Werte zwischen Null und Eins annehmen kann. Im fehlerfreien Fall nimmt die Qualitätskennzahl den Wert Eins an.

Die Qualitätskennzahl wird aus einer oder mehreren Grundgrößen, die aus dem mit der Kamera 8 aufgenommenen Bild der jeweiligen Markierung gebildet sind, abgeleitet. Die jeweiligen Grundgrößen werden auf ein ideales Bild der Markierungen bezogen und dadurch normiert, sodass die Grundgrößen Zahlen zwischen Null und Eins bilden.

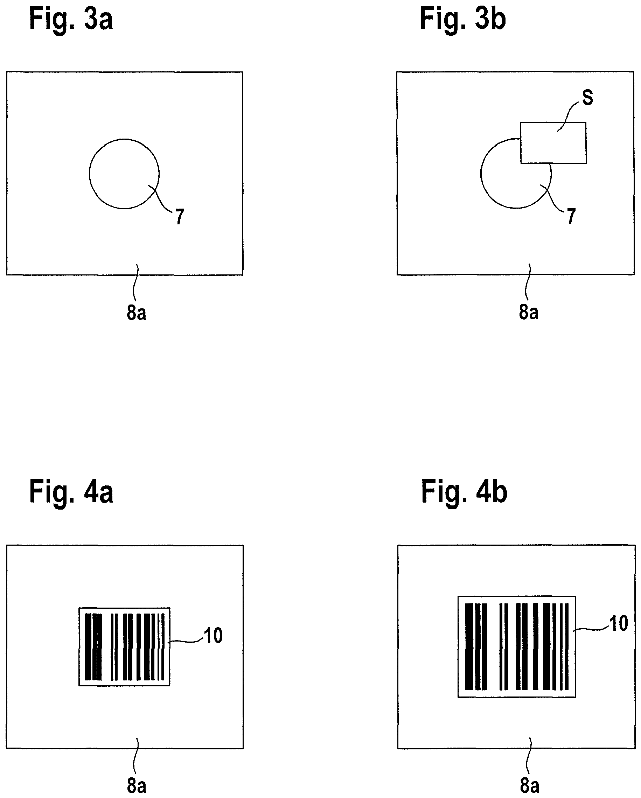

Dies ist im Folgenden anhand der Figuren 3a, 3b und auch 4a, 4b erläutert.

Figur 3a zeigt eine Abbildung eines Lochs 7 als spezifische Ausführungsform einer Markierung auf der photosensitiven Fläche 8a der Kamera 8, das beispielsweise in einem Einlernvorgang aufgenommen wird. Figur 3b zeigt die Abbildung des Lochs 7, das während der Betriebsphase mit der Kamera 8 aufgenommen wird. In diesem Fall ist durch eine Störung S, die beispielsweise von einer Folie gebildet ist, das Loch 7 teilweise verdeckt, sodass das Loch 7 von dem optischen Sensor 6 nur noch unvollständig erfasst wird.

In der Auswerteeinheit wird das aktuelle Bild mit dem idealen Bild in Beziehung gesetzt und daraus die Grundgröße berechnet. Im vorliegenden Fall wird aufgrund der vorliegenden Störung S diese Grundgröße einen Wert kleiner als Eins annehmen.

Weitere Grundgrößen können die Lage des Lochs 7 innerhalb der photosensitiven Fläche 8a oder die Größe der Abbildung des Lochs 7 sein. Beide Grundgrößen liefern eine Aussage darüber, ob die Kamera 8 des optischen Sensors 6 korrekt zur Markierung positioniert ist.

Schließlich können als weitere Grundgrößen die Bildhelligkeit und das Bildrauschen ausgewertet werden. Auch weitere Parameter, wie der Kontrast der Bilder, können Grundgrößen bilden.

Aus den einzelnen Grundgrößen wird dann in der Auswerteeinheit des optischen Sensors 6 die Qualitätskennzahl berechnet. Im vorliegenden Fall ergibt sich die Qualitätskennzahl aus einem gewichteten Mittelwert der Grundgrößen.

Die Normierungsfunktion für die Grundgrößen sowie die Gewichtungsfaktoren zur Bildung des gewichteten Mittelwerts stellen applikationsspezifische, einstellbare Parameter dar. Diese Parameter können als fest vorgegebene Vorabwerte während des Herstellungsprozesses vorgegeben werden. Alternativ können die Parameter Eingabegrößen sein, die von einem Benutzer über eine geeignete Schnittstelle in den optischen Sensor 6 eingegeben werden. Schließlich können die Parameter in einem Einlernvorgang bestimmt werden.

Die für die einzelnen Markierungen ermittelten Qualitätskennzahlen können als Ausgabegröße an eine externe Einheit ausgegeben werden. Beispielsweise können diese Ausgabegrößen in einer Cloud hinterlegt werden. Weiterhin können die Ausgabegrößen im optischen Sensor 6 zwischengespeichert werden. Als weitere Ausgabegrößen können Bilder der Markierungen ausgegeben werden, wenn die Qualitätskennzahl einen kritischen Schwellwert unterschreitet. Damit kann ein Benutzer anhand der Bilder der Markierungen, für welche kritische Qualitätskennzahlen ermittelt werden, eine Analyse der Markierungen durchführen und gegebenenfalls geeignete Gegenmaßnahmen einleiten.

Schließlich kann als Ausgabegröße ein Warnsignal generiert werden, wenn für eine Markierung eine Qualitätskennzahl ermittelt wird, die unterhalb eines kritischen Schwellwerts liegt. Auch diese Warnmeldungen können an die externe Einheit ausgegeben werden. Weiterhin kann am optischen Sensor 6 selbst ein Warnsignalgeber vorgesehen sein, der selbst entsprechende, vorzugsweise optische Warnsignale generiert.

Die Figuren 4a, 4b zeigen die Bildaufnahme einer Markierung in Form einer Marke, die im vorliegenden Fall von einem Barcode gebildet ist, in dessen Kontrastmuster die Position der Markierung kodiert ist.

Figur 4a zeigt die Bildaufnahme des Barcodes im fehlerfreien Fall. Figur 4b zeigt die Abbildung des Barcodes, wenn der optische Sensor 6 zu dicht an der Markierung positioniert ist und daher der Barcode größer auf der photosensitiven Fläche 8a abgebildet ist. Der Vergrößerungsfehler der Abbildung des Barcodes gegenüber dem fehlerfreien Fall bildet eine erste Grundgröße zur Bildung der Qualitätskennzahl.

Als weitere Grundgröße kann die Lage des Barcodes innerhalb der photosensitiven Fläche 8a ausgewertet werden. Schließlich können der Kontrast des Barcodes, die Bildhelligkeit und das Bildrauschen als Grundgröße ausgewertet werden.

Die weitere Auswertung erfolgt dann analog zum Ausführungsbeispiel der Figuren 3a, 3b.

### Bezugszeichenliste

- (1): Regalbediengerät
- (2): Hochregallager
- (3): Querriegel
- (4): Steher
- (5): Palette
- (6): optischer Sensor
- (7): Loch
- (8): Kamera
- (8a): photosensitive Fläche
- (9): Leuchtdiode

## Patentansprüche

1. Sensoranordnung zur Positionierung eines Gegenstands, mit einem am Gegenstand anordenbaren optischen Sensor (6), welcher eine Kamera (8) aufweist, wobei der Gegenstand relativ zu einer Anordnung von Markierungen beweglich angeordnet wird, wobei durch eine ortsaufgelöste Erfassung einer Markierung der optische Sensor (6) ein Positionssignal als Ausgabegröße generiert, wobei im optischen Sensor (6) eine Qualitätskennzahl als Maß für die Qualität der Erfassung der Markierungen bestimmt ist, wobei der optische Sensor (6) ausgebildet ist, die Qualitätskennzahl oder eine davon abgebildete Größe als Ausgabegröße auszugeben, und wobei anhand der Qualitätskennzahlen eine Diagnose und Früherkennung von Störungen der Sensoranordnung ermöglicht wird,
**dadurch gekennzeichnet, dass**
die Diagnose und Früherkennung im optischen Sensor selbst durchgeführt wird.

2. Sensoranordnung nach Anspruch 1, **dadurch gekennzeichnet, dass** eine Markierung von einer Marke oder einer Objektgeometriestruktur gebildet ist.

3. Sensoranordnung nach Anspruch 2, **dadurch gekennzeichnet, dass** die Objektgeometriestruktur eine Objektkante oder ein von einem Objektrand begrenztes Loch (7) ist.

4. Sensoranordnung nach einem der Ansprüche 1 - 3, **dadurch gekennzeichnet, dass** die Qualitätskennzahl aus mehreren Grundgrößen gebildet ist, wobei die Grundgröße Beurteilungskriterien für die erfasste Markierung und/oder für die Aufnahmebedingungen der Bilderfassung mit dem optischen Sensor (6) bilden.

5. Sensoranordnung nach Anspruch 4, **dadurch gekennzeichnet, dass** die Grundgröße eine Form einer Objektgeometriestruktur, ein Vergrößerungsfaktor einer Objektgeometriestruktur, der Kontrast einer Marke, die Lage einer erfassten Markierung innerhalb eines Erfassungsbereichs der Kamera (8), das Bildrauschen oder die Bildhelligkeit eines Bilds der Markierung ist.

6. Sensoranordnung nach einem der Ansprüche 4 oder 5, **dadurch gekennzeichnet, dass** die Grundgröße als Abweichung bezüglich einer Normierungsfunktion, welche der idealen Erkennung einer Markierung entspricht, definiert ist.

7. Sensoranordnung nach einem der Ansprüche 4 - 6, **dadurch gekennzeichnet, dass** die Qualitätskennzahl aus dem Mittelwert oder einem gewichteten Mittelwert der Grundgröße gebildet ist.

8. Sensoranordnung nach einem der Ansprüche 6 oder 7, **dadurch gekennzeichnet, dass** die Normierungsfunktion und Gewichtungsfaktoren zur Bildung gewichteter Mittelwerte einstellbare Parameter bilden.

9. Sensoranordnung nach Anspruch 8, **dadurch gekennzeichnet, dass** die einstellbaren Parameter als Vorabwerte in dem optischen Sensor (6) abgespeichert sind oder als Eingabegröße in den optischen Sensor (6) eingebbar sind oder in einem Einlernvorgang ermittelt werden.

10. Sensoranordnung nach einem der Ansprüche 1 - 9, **dadurch gekennzeichnet, dass** für jede Markierung eine Qualitätskennzahl ermittelt wird und eine Ausgabegröße ausgegeben wird.

11. Sensoranordnung nach einem der Ansprüche 1 - 10, **dadurch gekennzeichnet, dass** als Ausgabegröße ein Warnsignal generiert wird, wenn die Qualitätskennzahl für eine Markierung einen vorgegebenen Schwellwert unterschreitet.

12. Sensoranordnung nach einem der Ansprüche 1 - 11, **dadurch gekennzeichnet, dass** als Ausgabegröße Bilder von Markierungen ausgegeben werden, wenn die Qualitätskennzahl für die jeweilige Markierung einen vorgegebenen Schwellwert unterschreitet.

13. Sensoranordnung nach einem der Ansprüche 1 - 12, **dadurch gekennzeichnet, dass** der optische Sensor (6) an einem Gegenstand in Form eines Fahrzeugs anordenbar ist.

14. Sensoranordnung nach einem der Ansprüche 1 - 13, **dadurch gekennzeichnet, dass** der optische Sensor (6) an einem Gegenstand in Form eines Regalbediengeräts anordenbar ist und dass die Markierungen an Regalfächern angeordnet sind.

## Claims

1. A sensor assembly for positioning an object, having an optical sensor (6) which can be arranged on the object and has a camera (8),
wherein the object is arranged movably relative to an assembly of markings, wherein the optical sensor (6) generates a position signal as an output variable by a spatially resolved detection of a marking, wherein a quality index is determined in the optical sensor (6) as a measure of the quality of the detection of the markings,
wherein the optical sensor is designed to output the quality index or a variable mapped therefrom as an output variable,
and wherein a diagnosis and early detection of disturbances of the sensor assembly is made possible on the basis of the quality key figures,
**characterised in that** the diagnosis and early detection is carried out in the optical sensor itself.

2. A sensor assembly according to claim 1, **characterised in that** a marking is formed by a marking or an object geometry structure.

3. A sensor assembly according to claim 2, **characterised in that** the object geometry structure is an object edge or a hole (7) delimited by an object edge.

4. A sensor assembly according to one of the claims 1 to 3, **characterised in that** the quality index is formed from several basic variables, the basic variables forming assessment criteria for the detected marking and/or for the recording conditions of the image acquisition with the optical sensor (6).

5. A sensor assembly according to claim 4, **characterised in that** the basic variable is a shape of an object geometry structure, a magnification factor of an object geometry structure, the contrast of a marking, the position of a detected marking within a detection range of the camera (8), the image noise or the image brightness of an image of the marking.

6. A sensor assembly according to one of the claims 4 or 5, **characterised in that** the basic variable is defined as a deviation with respect to a normalisation function corresponding to the ideal detection of a marking.

7. A sensor assembly according to one of the claims 4 to 6, **characterised in that** the quality index is formed from the mean value or a weighted mean value of the basic variable.

8. A sensor assembly according to one of claims 6 or 7, **characterised in that** the normalisation function and weighting factors for forming weighted mean values form adjust-table parameters.

9. A sensor assembly according to claim 8, **characterised in that** the adjustable parameters are stored as preliminary values in the optical sensor (6) or can be entered as input variables in the optical sensor (6) or are determined in a teach-in process.

10. A sensor assembly according to one of claims 1 to 9, **characterised in that** a quality index is determined for each marking and an output variable is output.

11. A sensor assembly according to one of claims 1 to 10, **characterised in that** a warning signal is generated as an output variable if the quality index for a marking falls below a predetermined threshold value.

12. A sensor assembly according to one of the claims 1 to 11, **characterised in that** images of markings are output as an output variable if the quality index for the respective marking falls below a predetermined threshold value.

13. A sensor assembly according to one of the claims 1 to 12, **characterised in that** the optical sensor (6) can be arranged on an object in the form of a vehicle.

14. A sensor assembly according to one of claims 1 to 13, **characterised in that** the optical sensor (6) can be arranged on an object in the form of a shelving device, and **in that** the markings are arranged on shelving compartments.

## Revendications

1. Système de détection pour le positionnement d'un objet, avec un capteur optique (6) pouvant être disposé sur l'objet et présentant une caméra (8),
l'objet étant disposé de manière mobile par rapport à un système de marquages, le capteur optique (6) générant un signal de position comme grandeur de sortie par une détection à résolution spatiale d'un marquage, un indice de qualité étant déterminé dans le capteur optique (6) comme mesure de la qualité de la détection des marquages,
dans lequel le capteur optique est conçu pour délivrer en sortie l'indice de qualité ou une grandeur qui en est dérivée en tant que grandeur de sortie,
et dans lequel un diagnostic et une détection précoce de perturbations du système de détection sont rendus possibles sur la base des indices de qualité,
**caractérisé en ce que** le diagnostic et la détection précoce sont effectués dans le capteur optique lui-même.

2. Système de détection selon la revendication 1, **caractérisé en ce qu'**un marquage est formé par un marquage ou une structure géométrique d'objet.

3. Système de détection selon la revendication 2, **caractérisé en ce que** la structure géométrique de l'objet est un bord d'objet ou un trou (7) délimité par un bord d'objet.

4. Système de détection selon l'une des revendications 1 à 3, **caractérisé en ce que** l'indice de qualité est formé de plusieurs variables de base, les variables de base formant des critères d'évaluation pour le marquage détecté et/ou pour les conditions d'enregistrement de l'acquisition d'image avec le capteur optique (6).

5. Système de détection selon la revendication 4, **caractérisé en ce que** la variable de base est une forme d'une structure géométrique d'objet, un facteur de grossissement d'une structure géométrique d'objet, le contraste d'un marquage, la position d'un marquage détecté dans une plage de détection de la caméra (8), le bruit d'image ou la luminosité d'image d'une image du marquage.

6. Système de détection selon l'une des revendications 4 ou 5, **caractérisé en ce que** la variable de base est définie comme un écart par rapport à une fonction de normalisation correspondant à la détection idéale d'un marquage.

7. Système de détection selon l'une des revendications 4 à 6, **caractérisé en ce que** l'indice de qualité est formé à partir de la valeur moyenne ou d'une valeur moyenne pondérée de la variable de base.

8. Système de détection selon l'une des revendications 6 ou 7, **caractérisé en ce que** la fonction de normalisation et les facteurs de pondération pour former des valeurs moyennes pondérées forment des paramètres réglables.

9. Système de détection selon la revendication 8, **caractérisé en ce que** les paramètres réglables sont stockés en tant que valeurs préliminaires dans le capteur optique (6) ou peuvent être saisis en tant que variables d'entrée dans le capteur optique (6) ou sont déterminés dans un processus d'apprentissage.

10. Système de détection selon l'une des revendications 1 à 9, **caractérisé en ce qu'**un indice de qualité est déterminé pour chaque marquage et une variable de sortie est émise.

11. Système de détection selon l'une des revendications 1 à 10, **caractérisé en ce qu'**un signal d'avertissement est généré en tant que variable de sortie si l'indice de qualité pour un marquage tombe en dessous d'une valeur seuil prédéterminée.

12. Système de détection selon l'une des revendications 1 à 11, **caractérisé en ce que** des images de marquages sont émises en tant que variable de sortie si l'indice de qualité pour le marquage respectif tombe en dessous d'une valeur seuil prédéterminée.

13. Système de détection selon l'une des revendications 1 à 12, **caractérisé en ce que** le capteur optique (6) peut être disposé sur un objet en forme de véhicule.

14. Système de détection selon l'une des revendications 1 à 13, **caractérisé en ce que** le capteur optique (6) peut être disposé sur un objet se présentant sous la forme d'un dispositif de rayonnage, et **en ce que** les marquages sont disposés sur des compartiments de rayonnage.
